# FASCICULE DE BREVET EUROPEEN

(11) **EP 3 747 099 B1**
(45) Date de publication et mention de la délivrance du brevet: **07.06.2023**
(21) Numéro de dépôt: 19703274.1
(22) Date de dépôt: 30.01.2019
(51) Int. Cl.: H02H 3/06, H02H 3/16, H02H 7/125, H02H 7/26

(54) **POSTE DE CONVERSION COMPORTANT UN CIRCUIT D'EQUILIBRAGE DE TENSION**
UMWANDLUNGSSTATION MIT EINER SPANNUNGSAUSGLEICHSSCHALTUNG
CONVERSION STATION COMPRISING A VOLTAGE BALANCING CIRCUIT

(30) Priorité: 31.01.2018 FR 1850771
(43) Date de publication de la demande: 09.12.2020
(73) Titulaire: Supergrid Institute, 69100 Villeurbanne (FR)
(72) Inventeur: COLMENERO, Manuel, 69007 LYON (FR); BERTINATO, Alberto, 69007 LYON (FR)
(74) Mandataire: Opilex
(86) Numéro de dépôt international: PCT/EP2019/052302
(87) Numéro de publication internationale: WO 2019/149785

(56) Documents cités:
- GB-A- 2 537 850
- US-A1- 2015 035 364
- US-A1- 2015 340 859

## Description

L'invention selon la revendication 1 concerne les réseaux haute tension continu, interconnectés avec des réseaux haute tension alternatifs, et en particulier la gestion de défauts électriques pouvant apparaître sur le réseau haute tension continu, au niveau de postes de conversion. L'invention selon la revendication 9 concerne aussi un procède de commande du poste de conversion.

Pour limiter l'incidence d'un défaut électrique entre un pôle et la terre, des procédés connus permettent de détecter de façon fiable et rapide la localisation du défaut et permettent d'isoler la ligne en défaut.

Sur le réseau haute tension continu, différentes configurations de convertisseur alternatif/continu peuvent être utilisées. Selon une configuration connue, les convertisseurs alternatifs/continu sont connectés à deux pôles du réseau continu selon une configuration monopolaire symétrique.

Dans une telle configuration monopolaire symétrique, l'apparition d'un défaut électrique sur le réseau haute tension continu, entre un pôle et la terre, peut induire de fortes surtensions, persistant longtemps après la suppression du défaut détecté. En effet, lorsqu'un pôle en défaut est ramené au potentiel de terre, le pôle sain, qui est son pôle symétrique, subit un décalage de tension, de sorte que la différence de potentiel entre le pôle sain et la terre est doublée. Si cette différence de potentiel est maintenue de façon durable, on favorise le claquage des matériaux diélectriques et le vieillissement des câblages et des équipements. Les dispositifs de mise à la terre connectés au réseau alternatif peuvent également atteindre une saturation magnétique ou atteindre leurs limites thermiques. Ainsi, à la fois le réseau alternatif et le réseau continu peuvent être altérés par l'apparition d'un tel défaut électrique.

Le document `Application of dynamic braking systems in off-shore connected VSC HVDC' (publié par M. Ramet et Alias, dans le cadre de la conférence intitulée '13th IET International Conférence on AC and DC Power Transmission) décrit un procédé d'équilibrage forcé des tensions des deux pôles postérieurement à un défaut électrique. Ce document propose d'inclure une structure de recharge/décharge sélective entre chaque pôle et la terre. La structure de recharge/décharge inclut des redresseurs à pont complet connectés en série, chacun muni d'un condensateur monté en pont. Un interrupteur et une résistance de décharge connectent ces redresseurs à la terre. L'association des redresseurs permet de former une source de tension contrôlée par un circuit de commande, pour charger d'une part le pôle en défaut, et pour décharger d'autre part le pôle sain. Les différences de potentiel entre chaque pôle et la terre peuvent ainsi être équilibrées.

Cette solution présente un certain nombre d'inconvénients. La structure de recharge/décharge est à la fois coûteuse et relativement complexe à piloter. La structure de recharge/décharge impose de rajouter deux convertisseurs modulaires multi-niveaux pour chaque phase. En outre, la disponibilité est incertaine pour certains composants pour des niveaux de tension élevés à appliquer. Le dimensionnement des condensateurs peut notamment s'avérer problématique.

GB 2 537 850 and US 2015/340859 divulguent un convertisseur alternatif/continu étant connecté entre les premier et deuxième pôles en mode monopolaire symétrique, le noeud intermédiaire étant connecté à l'interface de connexion au réseau alternatif triphasé.

L'invention vise à résoudre un ou plusieurs de ces inconvénients. L'invention porte ainsi sur un poste de conversion entre un réseau alternatif haute tension et un réseau continu haute tension, tel que défini dans les revendications annexées.

L'invention porte également sur les variantes des revendications dépendantes. L'homme du métier comprendra que chacune des caractéristiques des variantes de la description ou des revendications dépendantes peut être combinée indépendamment aux caractéristiques d'une revendication indépendante, sans pour autant constituer une généralisation intermédiaire.

L'invention porte également sur un procédé de commande d'un poste de conversion entre un réseau alternatif haute tension et un réseau continu haute tension, comme défini dans les revendications annexées.

D'autres caractéristiques et avantages de l'invention ressortiront clairement de la description qui en est faite ci-après, à titre indicatif et nullement limitatif, en référence aux dessins annexés, dans lesquels :
- la figure 1 est une représentation schématique
- la figure 2 est un diagramme illustrant les tensions sur deux pôles d'un convertisseur de l'état de la technique lors de l'apparition d'un défaut électrique ;
- la figure 3 est un schéma illustrant un exemple de mode de réalisation d'un poste de conversion selon l'invention ;
- la figure 4 illustre schématiquement la structure d'un exemple de convertisseur pouvant être mis en oeuvre dans un poste de conversion ;
- la figure 5 illustre schématiquement le fonctionnement d'un poste de conversion selon l'invention suite à l'apparition d'un défaut électrique ;
- la figure 6 illustre schématiquement des étapes d'un exemple de procédé mettant en oeuvre l'invention ;
- les figures 7 à 10 illustrent l'évolution de différents paramètres lors de la simulation d'un défaut sur un exemple de réseau mettant en oeuvre l'invention.

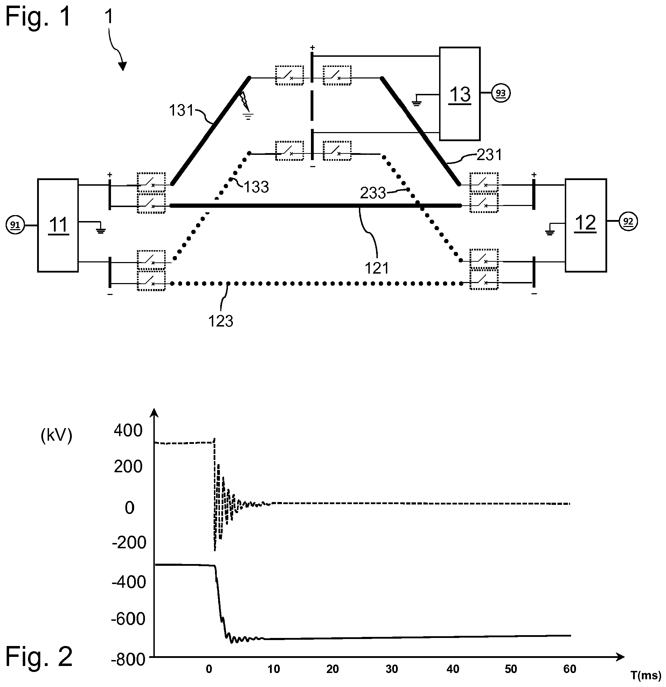

La figure 1 est une représentation schématique simplifiée d'un exemple de réseau haute tension courant continu 1 à multiples noeuds interconnectés avec des réseaux haute tension courant alternatif. Le réseau 1 comporte des postes de conversion 11, 12 et 13. L'invention est volontairement décrite pour un réseau 1 simplifié afin de faciliter la compréhension, mais peut bien entendu s'appliquer à un réseau haute tension courant continu 1 comportant deux ou plus de trois postes de conversion. Le réseau 1 peut avantageusement comporter un dispositif de contrôle (non illustré) configuré pour déterminer l'état du réseau et configuré pour communiquer avec les postes de conversion 11 à 13.

Les postes de conversion 11 à 13 comportent chacun :
- deux pôles formant une interface réseau continu, ici un pôle positif et un pôle négatif;
- une interface réseau alternatif ;
- une structure de conversion AC/DC détaillée ultérieurement ;
- un circuit d'équilibrage des tensions sur les pôles positif et négatif du poste de conversion.

L'interface réseau alternatif du poste 11 est connectée à un réseau alternatif local 91, l'interface réseau alternatif du poste 12 est connectée à un réseau alternatif local 92, et l'interface réseau alternatif du poste 13 est connectée à un réseau alternatif local 93.

Le réseau 1 comporte des lignes hautes tension. Le pôle positif du poste 11 et le pôle positif du poste 12 sont connectés par l'intermédiaire d'une ligne électrique haute tension 121. Le pôle positif du poste 11 et le pôle positif du poste 13 sont connectés par l'intermédiaire d'une ligne électrique haute tension 131. Le pôle positif du poste 12 et le pôle positif du poste 13 sont connectés par l'intermédiaire d'une ligne électrique haute tension 231. Les lignes électriques haute tension des pôles positifs sont ici illustrées en trait plein.

Le pôle négatif du poste 11 et le pôle négatif du poste 12 sont connectés par l'intermédiaire d'une ligne électrique haute tension 123. Le pôle négatif du poste 11 et le pôle négatif du poste 13 sont connectés par l'intermédiaire d'une ligne électrique haute tension 133. Le pôle négatif du poste 12 et le pôle négatif du poste 13 sont connectés par l'intermédiaire d'une ligne électrique haute tension 233. Les lignes électriques haute tension des pôles négatifs sont ici illustrées en pointillés.

Ainsi, chacun des pôles d'un poste de conversion est connecté à un pôle des deux autres postes de conversion, par l'intermédiaire d'une ligne électrique haute tension.

Chacune des extrémités de ces lignes électriques hautes tension peut être connectée au pôle d'un poste par l'intermédiaire d'un interrupteur non référencé. Un tel interrupteur est par exemple un disjoncteur de type mécanique. Bien que non illustré, un sectionneur commandé à commutation rapide peut être connecté en série avec un tel interrupteur entre la ligne haute tension et le pôle du poste correspondant.

Comme détaillé par la suite, la structure de conversion de chacun des postes 11 à 13 est connectée entre deux pôles en mode monopolaire symétrique. Dans la configuration des pôles en mode monopolaire symétrique, la mise à la terre est mise en oeuvre au niveau des réseaux haute tension alternatifs.

La configuration de la figure 1 illustre un défaut électrique sous forme de court-circuit entre la ligne 131 (connectée au pôle positif du poste 11 et au pôle positif du poste 13) et la terre.

La figure 2 est un diagramme illustrant les tensions sur deux pôles d'un exemple de convertisseur de l'état de la technique lors de l'apparition d'un défaut électrique entre un pôle et la terre. La tension du pôle subissant le défaut électrique est ici illustrée en trait discontinu. La tension du pôle sain symétrique du pôle en défaut est ici illustrée en trait continu. Le défaut intervient ici à t= 0s. Après une phase transitoire d'environ 4ms, la tension sur le pôle en défaut devient sensiblement nulle, la tension sur le pôle sain étant par contre doublée par rapport à sa tension nominale. Le maintien d'un tel décalage de tension sur le pôle sain peut induire un vieillissement, voire un claquage, des matériaux diélectriques des câblages du réseau tension continu. Le maintien d'un tel décalage de tension peut également impacter le réseau alternatif en atteignant la saturation magnétique ou la limite thermique d'équipements, tels que des dispositifs de mise à la terre.

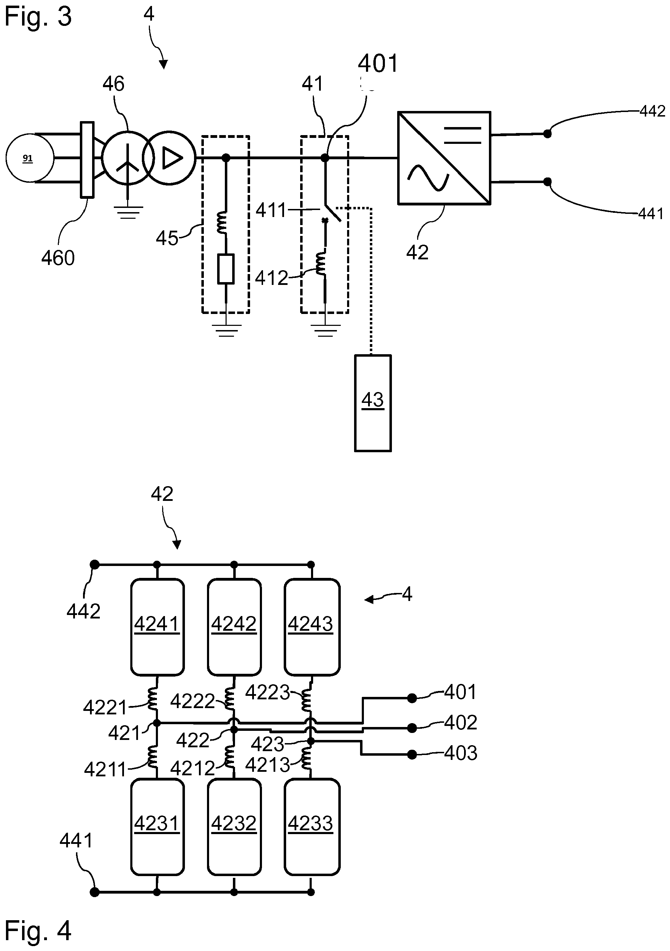

La figure 3 est un schéma illustrant un exemple de mode de réalisation d'un poste de conversion 4 selon l'invention. Le poste de conversion 4 comporte une interface de connexion 460 à un réseau alternatif triphasé 91. Le poste de conversion 4 comporte de plus un convertisseur 42. L'interface continu du convertisseur 42 est connectée à un pôle 441 d'une part et à un pôle 442 d'autre part. Le convertisseur 42 présente une interface alternatif pour la connexion des trois phases. Dans un souci de simplification, la connexion entre l'interface de connexion 460 et le convertisseur 42 est illustrée uniquement pour une phase. Chaque connexion de phase du convertisseur 42 est connectée à un noeud intermédiaire respectif. Pour la phase illustrée, le convertisseur 42 est connecté au noeud intermédiaire 40.

Un transformateur 46 est connecté entre l'interface de connexion 460 et chacun des noeuds intermédiaires des phases. En particulier, le transformateur 46 est ici connecté entre l'interface de connexion 460 et le noeud intermédiaire 40. Le transformateur 46 présente un enroulement primaire connecté à l'interface 460. Le transformateur 46 présente un enroulement secondaire connecté au point intermédiaire des différentes phases. L'enroulement secondaire du transformateur 46 est ici isolé de la terre.

Pour chacune des phases, le convertisseur 42 comporte en outre un circuit d'équilibrage des tensions des pôles 441 et 442, connecté entre un noeud intermédiaire et la terre. Le convertisseur 42 comporte ici un circuit d'équilibrage 41, connecté entre le noeud intermédiaire 40 et la terre.

Le poste de conversion 4 comprend en outre avantageusement un dispositif de connexion à la terre 45. Un tel dispositif de connexion à la terre 45 peut par exemple être un réacteur du type étoile-point, tel que décrit dans le document US 2012/0120691. Un tel réacteur peut inclure de façon connue en soi un enroulement inductif pour chacune des phases. Chaque enroulement inductif est connecté d'une part à un noeud intermédiaire 40 dédié à cette phase, et connecté d'autre part à un noeud commun. Ce noeud commun est connecté à la terre par l'intermédiaire d'une résistance.

Le circuit d'équilibrage 41 comporte un interrupteur commandé 411 et une inductance 412 connectés en série entre la terre et le noeud intermédiaire 40.

L'inductance 412 peut par exemple être du type à bobinage à noyau de fer ou à bobinage à noyau à air. La valeur d'inductance de l'inductance 412 peut par exemple être comprise entre 0,5 et 3H. On pourra par exemple favoriser une inductance 412 à noyau à air, du fait d'une absence de saturation magnétique. On peut noter que des inductances sont disponibles commercialement pour supporter des tensions supérieures à 100 kV, avec une résistance à des courants transitoires de plusieurs milliers d'ampères, avec des valeurs d'inductance d'au moins 2,5H.

Un interrupteur commandé 411 peut être réalisé sous la forme d'un Thirystor ou être un disjoncteur connu en soi pour les réseaux alternatifs haute tension.

Le poste de conversion 4 comporte ici un dispositif de commande 43. On peut cependant également envisager que le dispositif de commande soit centralisé pour le réseau 1, et soit par exemple distant du poste 4. Le dispositif de commande 43 est notamment configuré pour commander les commutations de l'interrupteur 411.

La figure 4 illustre schématiquement la structure d'un exemple de convertisseur pouvant être mis en oeuvre dans un poste de conversion 4. Les noeuds intermédiaires respectifs 401 à 403 pour chacune des phases sont ici illustrés. Pour chacune des phases, le convertisseur 42 comporte un premier bras de conversion connecté entre son noeud intermédiaire et le pôle 441, et un deuxième bras de conversion connecté entre son noeud intermédiaire et le pôle 442. Ainsi, le convertisseur 42 comporte :
- un premier bras de conversion 4231 connecté entre le pôle 441 et le noeud de connexion 421 (au même potentiel que le noeud intermédiaire 401) et un deuxième bras de conversion 4241 connecté entre le pôle 442 et le noeud de connexion 421. Les bras de conversion 4231 et 4141 sont ici connectés en série respectivement avec des inductances 4211 et 4221 ;
- un premier bras de conversion 4232 connecté entre le pôle 441 et le noeud de connexion 422 (au même potentiel que le noeud intermédiaire 402) et un deuxième bras de conversion 4242 connecté entre le pôle 442 et le noeud de connexion 422. Les bras de conversion 4232 et 4142 sont ici connectés en série respectivement avec des inductances 4212 et 4222 ;
- un premier bras de conversion 4233 connecté entre le pôle 441 et le noeud de connexion 423 (au même potentiel que le noeud intermédiaire 403) et un deuxième bras de conversion 4243 connecté entre le pôle 442 et le noeud de connexion 423. Les bras de conversion 4233 et 4143 sont ici connectés en série respectivement avec des inductances 4213 et 4223.

L'utilisation d'un convertisseur 42 de type modulaire multi-niveaux (pour Modular Multilevel Converter en langue anglaise), en particulier du type convertisseur à source de tension (pour Voltage Source Converter en langue anglaise), s'avère particulièrement avantageuse, du fait de sa modularité, de sa capacité à être dimensionné pour les exigences du réseau, ou encore du fait de son rendement énergétique élevé.

Le fonctionnement du poste de conversion 4 peut être le suivant. En l'absence de défaut électrique entre pôle et terre et lorsque les tensions sur les pôles 441 et 442 sont équilibrées, le dispositif de commande 43 maintient l'ouverture de l'interrupteur commandé 411 (et des interrupteurs commandés pour les dispositifs d'équilibrage de chacune des phases).

Le dispositif 43 est configuré pour détecter un défaut électrique entre un des pôles 441, 442 et la terre. La détection peut par exemple être réalisée par la réception d'un signal de défaut émis par un dispositif de mesure connecté au réseau continu.

Le dispositif 43 est configuré pour commander la fermeture des interrupteurs commandés des circuits d'équilibrage des différentes phases du poste de conversion 4. La commande de fermeture des interrupteurs commandés peut être conditionnée par la détermination que le défaut électrique a préalablement été isolé (provenant d'équipements du réseau ou déterminé par le dispositif 43 lui-même), ou peut être mise en oeuvre après une durée prédéterminée, devant garantir que le défaut a bien pu être isolé.

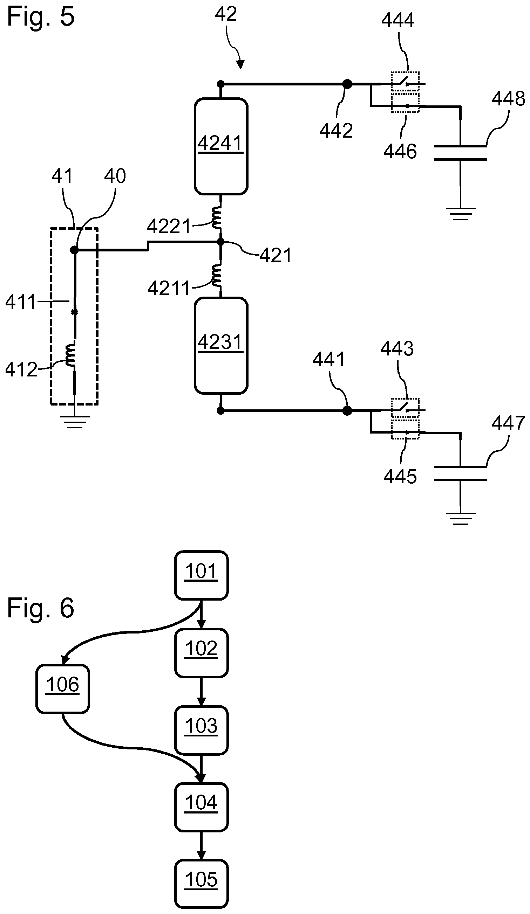

La figure 5 illustre la configuration du poste de conversion 4 pour une phase, après la fermeture de l'interrupteur commandé 411. Le pôle 441 est ici connecté à un disjoncteur 443 et à un disjoncteur 445. Le pôle 442 est ici connecté à un disjoncteur 444 et à un disjoncteur 446. Lors de l'isolation du défaut, en considère que les pôles 441 et 442 sont potentiellement connectés à des lignes respectives en défaut, raccordées respectivement aux disjoncteurs 443 et 444. Les disjoncteurs 443 et 444 sont ouverts pour mettre en oeuvre l'isolation du défaut, et isoler le convertisseur 42 de la ligne en défaut. Les disjoncteurs 445 et 446 sont fermés. Les disjoncteurs 445 et 446 sont connectés respectivement à des condensateurs 447 et 448 connectés à la terre durant le temps de rétablissement de puissance sur la ligne en défaut.

Comme détaillé précédemment, lors de l'apparition d'un défaut sur la ligne connectée au pôle 442, le potentiel sur le pôle 442 est ramené à la terre, tandis que le potentiel sur le pôle 441 est doublé. Après l'isolation du défaut, une différence de potentiel peut être appliquée entre le pôle 442 et la terre.

Lors de la fermeture de l'interrupteur commandé 411, un courant peut être échangé entre le réseau alternatif et le réseau continu. En présence d'un dispositif de connexion à la terre 45, on peut noter que le circuit d'équilibrage 41 présente un chemin de moindre impédance avec une constante de temps réduite, formant un chemin de courant du coté alternatif. Dès lors, le condensateur 447 se charge à travers le bras 4241, alors que le condensateur 448 se décharge à travers le bras 4231.

Avec un convertisseur 42 de type modulaire multi niveaux, chacun des bras se comporte comme une source de tension comportant une composante alternative et une composante continue. La composante continue est égale à la moitié de la différence de potentiel nominale entre les pôles 441 et 442. En l'absence de blocage du convertisseur 42, la différence de potentiel entre les pôles 441 et 442 est bien maintenue à la valeur nominale Vdc. Si une surintensité a conduit au blocage du convertisseur 42, le circuit de commande 43 commandera l'équilibrage après une étape préalable de déblocage du convertisseur 42.

Lors de la fermeture des interrupteurs commandés, une différence de potentiel Vdc/2 est appliquée entre les bornes des circuits d'équilibrage du poste de conversion 4.

Progressivement, avec la charge du condensateur 447 et la décharge le condensateur 448 :
- la différence de potentiel entre le pôle 442 et la terre atteint Vdc/2 ;
- la différence de potentiel entre le pôle 441 et la terre atteint Vdc/2.

On a ainsi réalisé l'équilibrage des pôles 441 et 442.

Avantageusement, lorsque le dispositif de commande 43 détermine que les pôles 441 et 442 sont équilibrés, le dispositif de commande 43 peut commander l'ouverture des interrupteurs commandés des circuits d'équilibrage.

La figure 6 reprend les étapes d'un exemple de procédé de fonctionnement d'un poste de conversion 4.

À l'étape 101, un défaut électrique apparaît entre un des pôles du poste de conversion 4 et la terre.

À l'étape 106, un processus d'isolation du défaut est mis en oeuvre. Un tel processus d'isolation peut typiquement être mis en oeuvre pendant une durée de 10 à 20 ms après l'apparition du défaut.

À l'étape 102, le type de défaut est identifié. Le dispositif 43 (ou un autre dispositif sur le réseau continu) identifie ainsi un défaut entre un pôle et la terre. L'identification peut typiquement être réalisée dans un délai compris entre 2 et 3 ms après l'apparition du défaut.

À l'étape 103, le dispositif 43 procède à la fermeture des interrupteurs commandés des circuits d'équilibrage du poste de conversion 4 (et en particulier la fermeture de l'interrupteur commandé 411). La fermeture des interrupteurs commandés des circuits d'équilibrage peut être conditionnée par une vérification préalable que le processus d'isolation du défaut de l'étape 106 est terminé. La fermeture des interrupteurs commandés peut également être mise en oeuvre après une durée prédéterminée, estimée suffisante pour le processus d'isolation du défaut. L'étape de fermeture des interrupteurs commandés peut par exemple être mise en oeuvre dans une plage comprise entre 20 et 40 millisecondes après l'apparition du défaut.

À l'étape 104, l'équilibrage entre les pôles du poste de conversion 4 intervient progressivement, du fait de la fermeture des interrupteurs commandés des circuits d'équilibrage. Si le convertisseur 42 a été bloqué suite au défaut (par exemple blocage d'un convertisseur 42 de type modulaire multi niveaux), l'équilibrage n'intervient qu'après le déblocage de ce convertisseur. L'équilibrage entre les pôles du poste de conversion 4 peut par exemple être mis en oeuvre dans une plage comprise entre 30 et 50 millisecondes après l'apparition du défaut.

À l'étape 105, le dispositif 43 détermine que l'équilibrage des pôles est réalisé. Le dispositif 43 peut également déterminer que les tensions respectives sur les pôles sont revenues à leur valeur nominale. Le dispositif 43 procède alors à l'ouverture des interrupteurs commandés des circuits d'équilibrage du poste de conversion 4. L'étape d'ouverture des interrupteurs commandés peut par exemple être mise en oeuvre dans une plage comprise entre 100 et 300 millisecondes après l'apparition du défaut.

L'invention permet de réaliser un équilibrage de tension entre les pôles 441 et 442 en un temps relativement réduit, ce qui permet :
- d'utiliser des dimensionnements de matériaux diélectriques moins contraignants ;
- de limiter les risques de saturation magnétique des transformateurs connectés au réseau alternatif ou d'éviter d'atteindre les limites thermiques de dispositifs de mises à la terre ;
- de limiter le dimensionnement nécessaire pour l'énergie d'absorption des limiteurs de courant intégrés dans le réseau ;
- d'assurer la continuité de service du réseau, en évitant d'imposer une décharge complète des lignes haute tension.

La stratégie de protection mise en oeuvre par l'invention est de type protection non sélective. La stratégie de détection du défaut et de localisation du défaut est connue en soi et ne sera pas davantage détaillée. La stratégie de suppression de défaut est également connue en soi et ne sera pas davantage détaillée. Une stratégie permettant de supprimer rapidement un défaut permet d'éviter d'induire des problèmes de stabilité sur le réseau continu.

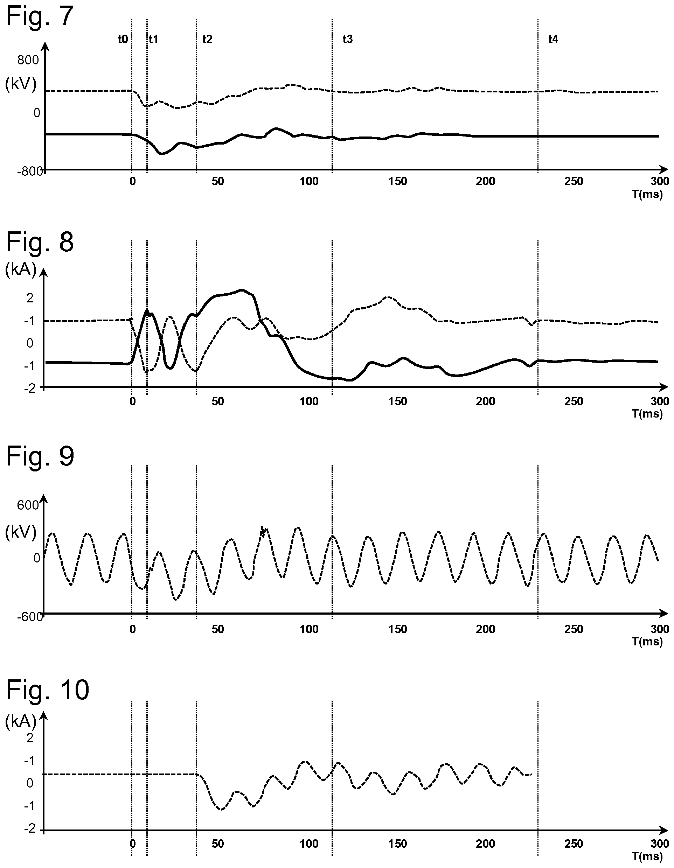

Les figures 7 à 10 sont des diagrammes correspondant à des résultats de simulation du fonctionnement d'un réseau lors d'un défaut, lors de la mise en oeuvre de l'invention. La figure 7 illustre les tensions sur les pôles 441 et 442 (la tension sur le pôle 442 est illustrée en trait discontinu). La figure 8 illustre les courants sur les pôles 441 et 442. La figure 9 illustre la tension sur le noeud intermédiaire d'une des phases. La figure 10 illustre le courant traversant le circuit d'équilibrage d'une des phases.

A l'instant t0, le défaut entre un pôle et la terre apparaît. À l'instant t1, les disjoncteurs connectés au pôle en défaut sont ouverts. À l'instant t2, les interrupteurs commandés des circuits d'équilibrage sont fermés. À l'instant t3, le défaut a été résolu et les disjoncteurs connectés au pôle initialement en défaut sont fermés et la transmission de puissance par l'intermédiaire du pôle initialement en défaut reprend. À l'instant t4, les interrupteurs commandés des circuits d'équilibrage sont ouverts.

On peut ici considérer que l'équilibrage des tensions sur les pôles 441 et 442 est obtenu après environ 150 ms suivant le défaut. De même, on peut considérer que le courant sur les pôles 441 et 442 est quasiment stabilisé environ 250 ms après le défaut. On constate que la fermeture des interrupteurs commandés des circuits d'équilibrage induit une surintensité transitoire se superposant aux oscillations transitoires induites par le défaut. Ce courant s'écoule vers les pôles pour mettre en oeuvre leur équilibrage. La valeur du courant d'équilibrage sera avantageusement limitée pour ne pas aboutir à un blocage d'un convertisseur de type modulaire multi niveaux.

On peut constater que l'utilisation d'un circuit d'équilibrage au niveau d'un poste de conversion permet de stabiliser la tension alternative également au niveau des autres postes de conversion.

À la figure 10, on peut constater qu'une fois que l'équilibrage est réalisé, le courant alternatif ne présente plus de composante continue, ce qui permet une ouverture aisée de l'interrupteur commandé du circuit d'équilibrage, en utilisant par exemple des disjoncteurs alternatifs de type connu.

## Revendications

1. Poste de conversion (4) entre un réseau alternatif haute tension (91) et un réseau continu haute tension (121, 123, 131, 133), **caractérisé en ce qu'**il comprend :
- une interface de connexion (460) à un réseau alternatif polyphasé (91) ;
- une interface de connexion à un réseau continu, comportant des premier et deuxième pôles (441, 442) ;
- un convertisseur alternatif/continu (42) ;
- pour chacune des phases :
- le convertisseur alternatif/continu (42) comporte un premier bras de conversion (4231) connecté entre un noeud intermédiaire (401) et le premier pôle (441), et un deuxième bras de conversion (4241) connecté entre le noeud intermédiaire (401) et le deuxième pôle (442), le convertisseur alternatif/continu (42) étant connecté entre les premier et deuxième pôles en mode monopolaire symétrique, le noeud intermédiaire étant connecté à l'interface de connexion (460) au réseau alternatif triphasé ;
**caractérisé par**
- un circuit d'équilibrage (41) des tensions des premier et deuxième pôles, incluant un interrupteur commandé (411) et une inductance (412) connectés en série entre la terre et le noeud intermédiaire (401) ;
- un dispositif de commande (43) configuré pour détecter un défaut électrique entre un des premier ou deuxième pôles et la terre, et configuré pour commander la fermeture desdits interrupteurs commandés de chacune des phases lors de la détection d'un défaut électrique.

2. Poste de conversion (4) selon la revendication 1, comprenant un transformateur (46) dont l'enroulement primaire est connecté à l'interface réseau alternatif (460) et dont l'enroulement secondaire est connecté au noeud intermédiaire de chaque phase.

3. Poste de conversion (4) selon la revendication 2, dans lequel l'enroulement secondaire du transformateur (46) est isolé de la terre.

4. Poste de conversion (4) selon l'une quelconque des revendications précédentes, dans lequel ledit dispositif de commande (43) est configuré pour détecter un équilibrage de la tension des premier et deuxième pôles par rapport à la terre, et configuré pour commander l'ouverture desdits interrupteurs commandés lors de la détection de l'équilibrage de la tension.

5. Poste de conversion (4) selon l'une quelconque des revendications précédentes, dans lequel lesdits bras de conversion du convertisseur alternatif/continu (42) sont chacun assimilables à une source de tension.

6. Poste de conversion (4) selon la revendication 5, dans lequel ledit convertisseur alternatif/continu (42) est un convertisseur modulaire multi-niveaux.

7. Poste de conversion (4) selon l'une quelconque des revendications précédentes, comprenant en outre un dispositif de connexion (45) des points intermédiaires de chacune des phases à la terre, ce dispositif de connexion étant du type étoile-point.

8. Poste de conversion (4) selon l'une quelconque des revendications précédentes, dans lequel ledit dispositif de commande (43) est configuré pour déterminer que le défaut détecté a été isolé, et configuré pour commander la fermeture desdits interrupteurs commandés seulement après la détermination que le défaut détecté a été isolé.

9. Procédé de commande d'un poste de conversion (4) selon la revendication 1 comprenant les étapes de détection d'un défaut électrique entre un des premier ou deuxième pôles et la terre, et de commande de la fermeture desdits interrupteurs commandés de chacune des phases lors de la détection d'un défaut électrique.

## Patentansprüche

1. Umrichterstation (4) zwischen einem Hochspannungs-Wechselstromnetz (91) und einem Hochspannungs-Gleichstromnetz (121, 123, 131, 133), **dadurch gekennzeichnet, dass** sie umfasst:
- eine Verbindungsschnittstelle (460) an ein mehrphasiges Wechselstromnetz (91);
- eine Verbindungsschnittstelle an ein Gleichstromnetz, die einen ersten und einen zweiten Pol (441, 442) aufweist;
- einen Wechselstrom/Gleichstrom-Wandler (42);
- für jede der Phasen:
- weist der Wechselstrom/Gleichstrom-Wandler (42) einen ersten Wandlerarm (4231) auf, der zwischen einem Zwischenknoten (401) und dem ersten Pol (441) angeschlossen ist, und einen zweiten Wandlerarm (4241), der zwischen dem Zwischenknoten (401) und dem zweiten Pol (442) angeschlossen ist, wobei der Wechselstrom/Gleichstrom-Wandler (42) zwischen dem ersten und dem zweiten Pol in einem symmetrischen monopolaren Modus angeschlossen ist, wobei der Zwischenknoten mit der Verbindungsschnittstelle (460) zum Dreiphasen-Wechselstromnetz verbunden ist;
**gekennzeichnet durch**
- eine Schaltung (41) zum Ausgleichen der Spannungen des ersten und zweiten Pols, die einen gesteuerten Schalter (411) und eine Induktivität (412) enthält, die zwischen Erde und dem Zwischenknoten (401) in Reihe geschaltet sind;
- eine Steuervorrichtung (43), die konfiguriert ist, um einen elektrischen Fehler zwischen einem ersten oder zweiten Pol und Erde zu erfassen, und konfiguriert ist, um das Schließen der gesteuerten Schalter jeder der Phasen bei Erfassung eines elektrischen Fehlers zu steuern.

2. Umrichterstation (4) nach Anspruch 1, umfassend einen Transformator (46), dessen Primärwicklung mit der Wechselstromnetz-Schnittstelle (460) und dessen Sekundärwicklung mit dem Zwischenknoten jeder Phase verbunden ist.

3. Umrichterstation (4) nach Anspruch 2, wobei die Sekundärwicklung des Transformators (46) von Erde isoliert ist.

4. Umrichterstation (4) nach einem der vorhergehenden Ansprüche, wobei die Steuervorrichtung (43) konfiguriert ist, um einen Spannungsausgleich des ersten und zweiten Pols in Bezug auf Erde zu erfassen, und konfiguriert ist, um das Öffnen der gesteuerten Schalter anlässlich der Erfassung des Spannungsausgleichs zu steuern.

5. Umrichterstation (4) nach einem der vorhergehenden Ansprüche, wobei die Wandlerarme des Wechsel-/Gleichstromwandlers (42) jeweils einer Spannungsquelle gleichzusetzen sind.

6. Umrichterstation (4) nach Anspruch 5, wobei der Wechselstrom/Gleichstrom-Wandler (42) ein modularer Mehrstufen-Wandler ist.

7. Umrichterstation (4) nach einem der vorhergehenden Ansprüche, die außerdem eine Vorrichtung (45) zum Verbinden der Zwischenpunkte jeder der Phasen mit Erde umfasst, wobei diese Verbindungsvorrichtung vom Sternpunkttyp ist.

8. Umrichterstation (4) nach einem der vorhergehenden Ansprüche, wobei die Steuervorrichtung (43) konfiguriert ist, um zu bestimmen, dass der erfasste Fehler isoliert wurde, und konfiguriert ist, um das Schließen der gesteuerten Schalter erst nach der Bestimmung zu steuern, dass der erfasste Fehler isoliert wurde.

9. Verfahren zum Steuern einer Umrichterstation (4) nach Anspruch 1, umfassend die Schritte des Erfassens eines elektrischen Fehlers zwischen einem ersten oder zweiten Pol und Erde, und des Steuerns des Schließens der gesteuerten Schalter jeder der Phasen bei Erfassung eines elektrischen Fehlers.

## Claims

1. Conversion station (4) between a high-voltage alternating network (91) and a high-voltage continuous network (121, 123, 131, 133), **characterized in that** it comprises:
- a connection interface (460) to a polyphase alternating network (91);
- a connection interface to a continuous network, having first and second poles (441, 442);
- an AC/DC converter (42);
- for each of the phases:
- the AC/DC converter (42) has a first conversion arm (4231) connected between an intermediate node (401) and the first pole (441), and a second conversion arm (4241) connected between the intermediate node (401) and the second pole (442), the AC/DC converter (42) being connected between the first and second poles in symmetrical monopolar mode, the intermediate node being connected to the connection interface (460) to the alternating three-phase network;
**characterized by**
- a balancing circuit (41) for the voltages of the first and second poles, including a controlled switch (411) and an inductor (412) connected in series between earth and the intermediate node (401);
- a control device (43) configured to detect an electrical fault between one of the first or second poles and earth, and configured to control the closing of said controlled switches of each of the phases when an electrical fault is detected.

2. Conversion station (4) according to Claim 1, comprising a transformer (46), the primary winding of which is connected to the alternating network interface (460) and the secondary winding of which is connected to the intermediate node of each phase.

3. Conversion station (4) according to Claim 2, wherein the secondary winding of the transformer (46) is isolated from earth.

4. Conversion station (4) according to any one of the preceding claims, wherein said control device (43) is configured to detect a balance of the voltage of the first and second poles with respect to earth, and configured to control the opening of said controlled switches when the balance of the voltage is detected.

5. Conversion station (4) according to any one of the preceding claims, wherein said conversion arms of the AC/DC converter (42) can each be assimilated to a voltage source.

6. Conversion station (4) according to Claim 5, wherein said AC/DC converter (42) is a multi-level modular converter.

7. Conversion station (4) according to any one of the preceding claims, further comprising a connection device (45) of the intermediate points of each of the earth phases, this connection device being of the star-point type.

8. Conversion station (4) according to any one of the preceding claims, wherein said control device (43) is configured to determine that the detected fault has been isolated, and configured to control the closing of said controlled switches only after it has been determined that the detected fault has been isolated.

9. Method of controlling a conversion station (4) according to Claim 1, comprising the steps of detecting an electrical fault between one of the first or second poles and earth, and controlling the closing of said controlled switches of each of the phases when an electrical fault is detected.
